Europäisches Patentamt

(19) European Patent Office

Office européen des brevets

(11) Numéro de publication : **0 277 074 B1**

# (12) FASCICULE DE BREVET EUROPEEN

(45) Date de publication du fascicule du brevet :
03.04.91 Bulletin 91/14

(51) Int. Cl.⁵ : **C03B 27/04**

(21) Numéro de dépôt : **88400213.0**

(22) Date de dépôt : **29.01.88**

---

(54) **Volumes de verre trempés par contact avec contraintes de bords renforcés.**

---

Le dossier contient des informations techniques présentées postérieurement au dépôt de la demande et ne figurant pas dans le présent fascicule.

(30) Priorité : **29.01.87 FR 8701063**

(43) Date de publication de la demande :
**03.08.88 Bulletin 88/31**

(45) Mention de la délivrance du brevet :
**03.04.91 Bulletin 91/14**

(84) Etats contractants désignés :
**AT BE CH DE ES FR GB IT LI LU NL SE**

(56) Documents cités :
**DE-C- 714 303**
**FR-A- 1 580 305**

(56) Documents cités :
**FR-A- 2 267 286**
**FR-A- 2 323 650**
**GB-A- 1 158 360**
**GB-A- 2 011 377**

(73) Titulaire : **SAINT-GOBAIN VITRAGE INTERNATIONAL**
**18, avenue d'Alsace**
**F-92400 Courbevoie (FR)**

(72) Inventeur : **d'Iribarne, Benoit**
**Am Pannhaus 7**
**W-5100 Aachen (DE)**
Inventeur : **Houang, Paul**
**17, rue Albert Bayet**
**F-75013 Paris (FR)**

(74) Mandataire : **Leconte, Jean-Gérard et al**
**SAINT-GOBAIN VITRAGE 39, Quai Lucien Lefranc**
**F-93300 AUBERVILLIERS (FR)**

## Description

L'invention concerne la trempe de volumes de verre, et éventuellement leur bombage simultané par le procédé dit par contact et elle se rapporte plus particulièrement au traitement particulier des bords des volumes de verre lors de cette trempe, éventuellement accompagnée d'un bombage.

Dans une trempe du verre à l'air, c'est-à-dire en soufflant de l'air froid sur un volume de verre chauffé à sa température de trempe, c'est sur les bords du verre que le refroidissement est le plus important et que l'échange thermique est le meilleur. Il en résulte sur les bords du verre trempé à l'air, des contraintes de compression sur toute l'épaisseur du verre et jusqu'à une certaine distance des bords que l'on appelle couramment "contraintes de bord". Ces contraintes garantissent la tenue et la solidité de ce volume de verre, notamment lors d'opérations telles que son montage dans une baie d'automobile. D'ailleurs un choc appliqué sur la tranche d'un volume de verre trempé à l'air n'entraîne généralement qu'un écaillage. Au contraire le même choc appliqué sur la tranche d'un volume de verre trempé par contact peut entraîner l'éclatement. Il s'agit là d'un défaut inhérent au procédé de trempe par contact lui-même puisque la tranche du verre n'est pas refroidie lors de la trempe par contact.

En effet dans ce procédé de trempe par contact, un volume de verre est refroidi à l'aide de plaques de refroidissement appliquées contre la totalité de ses faces, soit directement, soit de préférence avec intercalation d'un matériau tampon thermique et mécanique (voir par exemple FR-A-1 580 305).

Ainsi le long des faces de ce volume de verre, le refroidissement est favorisé par le contact avec les plaques de refroidissement ou ave le matériau tampon, mais au contraire sur le bord de ce volume de verre ce contact n'existe pas et il en résulte des contraintes de bord trop faibles en valeur absolue et/ou existant sur une profondeur trop faible, ce qui se traduit par une fragilité des volumes de verre ainsi trempés à tout choc sur leurs bords.

La présente invention vise à résoudre ce problème.

Elle vise à fournir un procédé qui permette une trempe des volumes de verre suffisante sur leurs bords.

Elle vise également à fournir des volumes de verre n'ayant pas la fragilité des bords reprochée aux volumes de l'art antérieur, trempés et éventuellement bombés par contact.

Elle propose pour cela un procédé de trempe et éventuellement un bombage par contact dans lequel on applique sur les faces des volumes de verre préalablement entièrement chauffés à leur température de trempe et de bombage, des plaques de refroidissement éventuellement revêtues d'un matériau tampon thermique et mécanique et éventuellement bombées et on abaisse la température des bords des volumes de verre par rapport à leur centre, cet abaissement relatif de température se faisant avant et/ou pendant le pressage des volumes réalisant la trempe et éventuellement le bombage par contact de manière à ce que le verre se trouve en compression dans toute son épaisseur, au moins à ses bords.

On connait de FR-A-2 323 650 un procédé de renforcement des bords d'un pare-brise feuilleté consistant dans un refroidissement privilégié de la région périphérique des plaques de verre, la région centrale n'étant pas ou beaucoup moins refroidie. Mais même dans cette région périphérique, les contraintes compressives mesurées sont inférieures à 30 MPa (et sont maintenues systématiquement inférieures à 8 MPa dans la partie centrale des plaques de verre). Ces valeurs sont totalement en dehors des vitrages trempés au sens usuel du mot qui eux présentent sur toute la surface des valeurs de contraintes de compression de surface supérieures à 100 MPa.

Avant le pressage de la tempe et éventuellement du bombage, cette différence de température entre les bords et le centre peut s'obtenir pendant le chauffage du volume de verre, en posant des masques thermiques dans le four, et/ou en chauffant préférentiellement le centre des volumes, et/ou en soufflant un gaz de refroidissement en particulier de l'air, notamment de l'air comprimé.

Pendant le pressage de la trempe et éventuellement du bombage, cette différence entre les bords et le centre s'obtient par soufflage d'un gaz de refroidissement, en particulier d'air, notamment d'air comprimé.

L'invention propose également des dispositifs permettant d'obtenir des volumes de verre ayant des contraintes de bord suffisantes.

Elle propose en particulier un dispositif de trempe et éventuellement de bombage par contact, comprenant deux plaques de refroidissement, de préférence revêtues par un matériau tampon mécanique et thermique, destinées à être appliquées contre les faces des feuilles de verre, et comprenant également des moyens de refroidissement disposés pour agir sur les bords des feuilles de verre.

L'invention concerne enfin des volumes de verre trempés et éventuellement bombés par contact présentant des contraintes de bord suivant les bords d'un même volume exprimées par un chiffre, qui en fonction des conditions de trempe, peut être inférieur, supérieur ou égal à celui qui exprime les contraintes de compression de surface, ces volumes présentant en outre une trempe dite "Sécurit" les rendant utilisables en tant que vitrages pour l'automobiles.

L'invention sera maintenant décrite plus en détail en référence aux figures jointes qui représentent :

• figure 1 : un schéma général d'une installation de bombage-trempe par contact,

• figure 2 : un schéma du poste de bombage-trempe par contact équipé selon l'invention de moyens de soufflage de gaz de refroidissement sur les bords du verre au cours du pressage de bombage-trempe,

• figure 3A, 3B, 3C : des vues de détail montrant des variantes de disposition du verre par rapport aux plaques de refroidissement dans le cas d'un soufflage de gaz de refroidissement au cours du pressage.

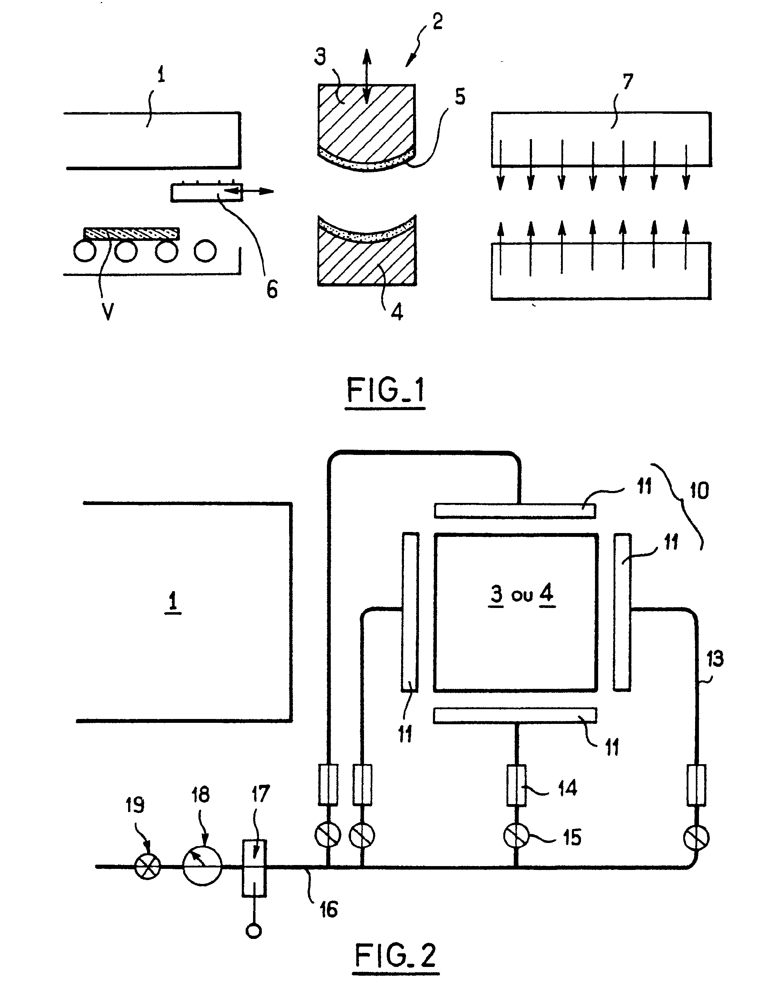

La figure 1 donne le schéma général d'une installation de bombage-trempe par contact. Une telle installation comprend un four 1 de chauffage des feuilles, plaques, volumes de verre V, un poste de trempe et éventuellement bombage ayant essentiellement deux plaques de refroidissement 3 et 4 éventuellement recouvertes d'un matériau 5 tampon à la fois thermique et mécanique, un moyen 6 de support et de transport des volumes de verre du four 1 au poste 2 de trempe et éventuellement bombage, notamment un convoyeur à rouleau et/ou à coussin d'air, ou un élément supérieur de transfert à dépression déplaçable par exemple sur des rails non représentés. Avantageusement, le poste 2 de trempe et éventuellement de bombage est suivi d'un poste 7 de refroidissement, dans lequel les volumes de verre dont les contraintes ont été figées par pressage entre les plaques 3 et 4, vont terminer leur refroidissement, libérant ainsi rapidement les plaques 3 et 4 pour le pressage d'un autre volume de verre.

Selon une forme de réalisation illustrée figure 2, au poste 2 de trempe et de bombage éventuel, sont prévus des moyens 10 de refroidissement des bords des volumes de verre V. Ces moyens 10 sont en particulier des moyens de soufflage d'un gaz de refroidissement, en particulier de l'air, notamment de l'air comprimé.

Ces moyens 10 de soufflage peuvent par exemple être constitués de rampes tubulaires 11 percées de trous 12, soufflant de l'air en direction des bords des volumes de verre V. Ces rampes 11 peuvent être alimentées chacune par une conduite d'alimentation 13 équipée d'un débimètre 14 et d'une vanne 15, l'ensemble de ces conduites 13 étant relié à un tronçon commun 16 muni d'un détendeur 17, d'un manomètre 18 et d'une vanne 19, ce tronçon commun 16 étant branché sur le circuit d'air comprimé.

Des moyens 10 de soufflage d'un autre type peuvent bien sûr être mis en oeuvre. Un gaz autre que de l'air comprimé peut aussi être employé sans que l'invention soit modifiée pour cela.

Dans la mesure où des contraintes de bord élevées sont recherchées sur la totalité des bords, les moyens 10 de soufflage couvrent la totalité des bords des volumes de verre V. On entend par bords des volumes de verre V non seulement les limites des faces des volumes à leur périphérie, mais également les limites des faces des volumes à l'approche d'un trou, d'une découpe ou d'une encoche, pratiqué aussi bien à la proximité de la périphérie des volumes de verre que dans les zones centrales desdits volumes, ce trou, cette découpe, cette encoche pouvant servir par exemple à la fixation d'un bloc de serrure, de gonds, ou d'accessoires divers.

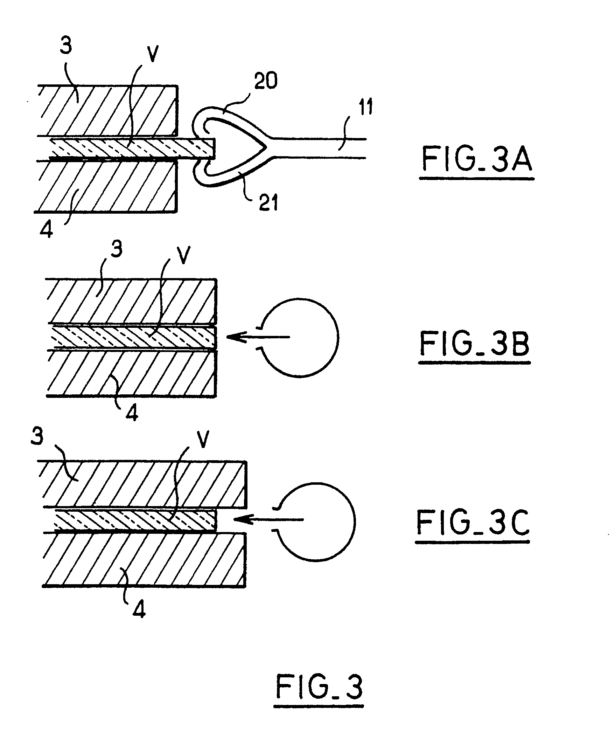

Les plaques de refroidissement 3 et 4 libèrent les bords des volumes de verre V sur lesquels un soufflage est prévu. Lesdites plaques 3 et 4 peuvent être légèrement plus petites que les volumes de verre à traiter comme illustré figure 3A dégageant ainsi non seulement la tranche des volumes V, mais également une étroite bordure de leurs faces de l'ordre de quelques millimètres, par exemple 1 à 10 mm et en particulier environ 5 mm. Dans cette configuration, les moyens de soufflage 10 peuvent avoir la forme prévue sur la figure 3A, à savoir être divisés en deux buses 20 et 21 soufflant l'une sur la bordure d'une face du volume de verre V, l'autre sur la bordure de l'autre face, légèrement en direction de l'extérieur dudit volume V.

Dans une autre configuration, représentée sur la figure 3B, les plaques de refroidissement 3 et 4 et les volumes de verre V peuvent avoir sensiblement les mêmes dimensions.

Dans une autre configuration possible, représentée sur la figure 3C, les plaques de refroidissement 3 et 4 peuvent déborder légèrement, de quelques millimètres, des volumes de verre V.

Dans chacune des configurations, de légères imprécisions de l'ordre de 1 ou 2 mm sur le positionnement des volumes V par rapport aux plaques 3, 4 n'auront pratiquement pas d'influence sensible sur les résultats de trempe.

Différentes opérations de trempe-bombage par contact associé à un soufflage sur les bords ont été menées et ont donné lieu aux mesures répertoriées ci-après :

EXEMPLE 1 :

– volumes de verre float de 3 mm d'épaisseur.
– température des volumes immédiatement avant la trempe : 650°C,
– plaques de refroidissement en cuivre recouvertes d'un matériau tampon,
– rampes de soufflage formées d'un tube d'acier de 10 mm de diamètre, percées de trous de 2 mm de diamètre à intervalles réguliers de 12 mm, reliées au réseau d'air comprimé – distance des trous de soufflage par rapport à la tranche du verre égale à 10 mm, dans la configuration illustrée par la figure 3B, c'est-à-dire celle dans laquelle plaques 3 et 4 et volumes de verre ont la même dimension, les rampes 11 soufflant en direction de la tranche du verre,
– pression sur le réseau d'air comprimé : 1 bar.
Le soufflage sur les bords a lieu pendant l'application des plaques de refroidissement contre les volumes de verre, c'est-à-dire pendant un temps d'au moins 3 secondes, de préférence d'au moins 5 secondes jusqu'à 10 secondes et qui peut même être beaucoup plus long sans préjudice pour la qualité des volumes, seule la cadence du procédé étant pénalisée lorsque ce temps est très long.

    – contraintes des bords obtenues : 120 MPa,

    – contraintes de compression de surface obtenues : 130 MPa,

    – profondeur comptée à partir des bords du verre et pour laquelle le verre se trouve en compression dans toute son épaisseur : 3,5 mm.

## EXEMPLE 2 :

Mêmes conditions opératoires que dans l'exemple 1, sauf :

    – distance verre – rampes de soufflage : 6 mm,

    – contraintes de bord obtenues : 150 MPa,

    – contraintes de compression de surface obtenues : 130 MPa,

    – profondeur comptée à partir des bords du verre et pour laquelle le verre se trouve en compression dans toute son épaisseur : 8 mm.

## EXEMPLE 3 :

Mêmes conditions que dans l'exemple 1, sauf en ce qui concerne :

    – l'épaisseur du verre : 4 mm,

    – distance des trous de soufflage : 4 mm,

    – distance verre – rampes de soufflage : 16 mm,

    – contraintes de bord obtenues : 140 MPa,

    – contraintes de compression de surface : 125 MPa,

    – profondeur comptée à partir des bords du verre et pour laquelle le verre se trouve en compression dans toute son épaisseur : 5 mm.

En jouant sur l'intensité du soufflage, il est possible de faire varier la valeur des contraintes de bord, ces contraintes de bord pouvant si on le désire, être si importantes qu'elles s'expriment par un chiffre supérieur à celui qui exprime les contraintes de compression de surface, notamment plus élevé d'au moins 30% dans la mesure où l'on veut en même temps préserver la qualité de trempe dite "Sécurit" requise se pour l'emploi des volumes ainsi trempés en tant que vitrages automobiles. Cette trempe "Securit" est telle qu'après fragmentation du verre, au moins 15% de visibilité subsiste dans une zone centrale d'au moins 20 cm × 50 cm, (c'est-à-dire que le total des surfaces de tous les fragments d'au moins 2 cm$^2$ doit être au moins de 15% de la surface du volume de verre), aucun fragment ne pouvant malgré tout avoir une surface supérieure à 16 cm$^2$, telle également que la fragmentation dans la zone périphérique soit fine c'est-à-dire que l'on compte de 40 à 350 fragments dans un carré de 5 cm × 5 cm, et qu'il n'y ait pas d'aiguilles de plus de 7,5 cm de longueur dans cette zone périphérique.

Les contraintes de bord suffisantes peuvent être obtenues par soufflage pendant la trempe par contact éventuellement combinée avec un bombage, de façon à obtenir un abaissement de la température des bords par rapport à celle du centre. Elles peuvent également être obtenues par une action au niveau du chauffage du verre à tremper, c'est-à-dire un chauffage différencié qui permet de porter la zone des bords du volume à une température inférieure à la zone centrale. Cela s'obtient par un chauffage accentué de la zone centrale, ou par un chauffage, uniforme mais avec interposition de masques thermiques sur les bords et/ou par refroidissement des bords par exemple par soufflage à l'aide de rampes de soufflage du type de celles déjà décrites, mais cette fois-ci installées dans le four de réchauffage du verre.

En outre, les deux actions, celle opérée dans le four avant le pressage, et celle opérée dans le poste de trempe et éventuellement de bombage, pendant le pressage, peuvent être combinées.

Grâce à l'invention, il est donc possible d'obtenir des volumes de verre présentant des contraintes de bord élevées, telles tout du moins que les bords des volumes de verre ne soient plus des régions particulièrement fragiles. La trempe par contact, renforcée sur les bords grâce à un refroidissement desdits bords peut en outre éventuellement être associée à un bombage simultané, apte à conférer aux volumes de verre une grande précision de forme, sans marques de pinces. Les volumes de verre ainsi fabriqués sont utilisables dans tous les domaines, en particulier dans celui de l'automobile.

En outre, on peut remarquer aussi que cette trempe éventuellement accompagnée d'un bombage, avec refroidissement des bords peut être pratiquée aussi bien en vertical qu'en horizontal.

En outre, encore l'invention donne la possibilité d'un refroidissement indépendant d'un bord à l'autre. Ainsi, si on le désire on peut moduler l'intensité ou la durée du moment du refroidissement d'un bord à l'autre. Ceci est particulièrement facile à réaliser lorsqu'on utilise le soufflage.

Grâce à cela, il est possible d'obtenir des volumes de verre ayant sur tous leurs bords des contraintes de bords suffisantes pour éviter la fragilité, mais ayant en outre sur certains bords seulement des contraintes bien supérieures à ce qui est suffisant pour éviter la fragilité, notamment pour répondre sans dommage pour le volume de verre à des chocs ou en général à des sollicitations, prévus comme pouvant être exceptionnellement importants sur ces bords particuliers. Bien entendu il est également possible de fabriquer des volumes de verre ayant des contraintes de bords suffisantes le long de certains bords pour leur éviter la fragilité, mais au contraire pratiquement inexistantes ou plus faibles sur d'autres bords qu'on sait ne pas être soumis à des chocs ou sollicitations susceptibles d'entraîner la casse.

Dans ces cas précédents, lorsqu'on utilise le soufflage, une action sur les vannes 15 permet d'équilibrer les contraintes de bord, d'un bord à l'autre comme souhaité.

## Revendications

1. Procédé de trempe et éventuellement bombage par contact de volumes de verre dans lequel on applique sur les faces de ces volumes de verre (V) préalablement entièrement chauffés à leur température de trempe et de bombage, des plaques de refroidissement (3, 4) éventuellement revêtues d'un matériau tampon (5) thermique et mécanique et éventuellement bombées, **caractérisé en** ce qu'on abaisse la température des bords des volumes de verre par rapport au reste de leur surface, avant et/ou pendant le pressage réalisant le trempe et éventuellement le bombage par contact, des volumes de manière à ce que le verre se trouve en compression dans toute son épaisseur, au moins à ses bords.

2. Procédé selon la revendication 1, **caractérisé en ce que** l'abaissement de température des bords réalisé avant le pressage s'obtient par chauffage différencié et/ou soufflage sur lesdits bords, d'un gaz de refroidissement, en particulier d'air, notamment d'air comprimé, la température de ces bords restant néanmoins supérieure à la température de trempe.

3. Procédé selon la revendication 2, **caractérisé en ce que** le chauffage différencié est réalisé dans le four de réchauffage (1) des volumes de verre (V) par interposition d'écrans thermiques en regard des bords

4. Procédé selon la revendication 1, **caractérisé en ce que** l'abaissement de température des bords des volumes de verre (V) pendant le pressage est obtenu par soufflage sur lesdits bords d'un gaz de refroidissement, en particulier d'air, notamment d'air comprimé.

5. Procédé selon la revendication 4, **caractérisé en ce que** le soufflage est pratiqué sur la totalité de la longueur des bords, en particulier sur toute la périphérie des volumes de verre (V).

6. Procédé selon l'une des revendications précédentes, **caractérisé en ce que** le refroidissement est modulé d'un bord à l'autre.

7. Procédé selon l'une des revendications précédentes, **caractérisé en ce que** après pressage entre les plaques de refroidissement (3, 4) au moins jusqu'au figeage des contraintes, les volumes de verre (V) sont soumis à un refroidissement complémentaire, notamment par soufflage de gaz de refroidissement, en particulier d'air, sur l'ensemble de leur surface.

8. Dispositif de trempe et éventuellement bombage par contact de volumes de verre (V) comprenant deux plaques de refroidissement (3, 4), de préférence revêtues par un matériau tampon (5) mécanique et thermique, destinées à être appliquées contre les faces des volumes de verre (V), **caractérisé en ce qu'il** comprend en outre des moyens de refroidissement (11), notamment des busettes de soufflage d'un gaz de refroidissement, disposés pour agir sur les bords des volumes de verre.

9. Dispositif selon la revendication 8, **caractérisé en ce que** les plaques de refroidissement (3, 4) laissent déborder les volumes de verre (V).

10. Dispositif selon la revendication 9, **caractérisé en ce que** les busettes (20) refroidissent outre la tranche des volumes de verre (V), le bord des faces des volumes de verre (V).

11. Dispositif selon la revendication 8, **caractérisé en ce que** les plaques de refroidissement (3, 4) et les volumes de verre (V) sont sensiblement de la même dimension.

12. Volumes de verre (V) trempés et éventuellement bombés par contact présentant des contraintes de bord suivant les bords d'un même volume exprimées par un chiffre, qui en fonction des conditions de trempe, peut être inférieur, supérieur ou égal à celui qui exprime les contraintes de compression de surface, ces volumes présentant en outre une trempe dite "Sécurit" les rendant utilisables en tant que vitrages pour l'automobile.

## Ansprüche

1. Verfahren zum Kontaktvorspannen und gegebenenfalls zum Biegen von Glasscheiben, bei welchem auf die Oberflächen der Glasscheiben (V), die zuvor vollständig auf ihre Vorspann- und Biegetemperatur erhitzt werden, Kühlplatten (3, 4) zur Anwendung gebracht werden, die gegebenenfalls mit einem thermischen und mechanischen Puffermaterial (5) beschichtet und gegebenenfalls gewölbt sind, **dadurch gekennzeichnet**, daß die Temperatur an den Rändern der Glasscheiben im Vergleich zu deren restlicher Oberfläche vor und/oder während des das Vorspannen und gegebenenfalls die Biegung bewirkenden Pressens so gesenkt wird, daß das Glas über seine gesamte Dicke, zumindest aber an seinen Rändern, sich unter Druck befindet.

2. Verfahren nach Anspruch 1, dadurch gekennzeichnet, daß die vor dem Pressen stattfindende Temperatursenkung der Ränder durch unterschiedliche Erhitzung und/oder Anblasen der Ränder mit einem Kühlgas, insbesondere Luft, insbesondere Druckluft, erreicht wird, wobei die Temperatur dieser Ränder jedoch höher bleibt als die Vorspanntemperatur.

3. Verfahren nach Anspruch 2, dadurch gekennzeichnet, daß die unterschiedliche Erhitzung im Wärmeofen (1) der Glasscheiben (V) durch die Einfügung von Hitzeschilden bezüglich der Ränder erfolgt.

4. Verfahren nach Anspruch 1, dadurch gekennzeichnet, daß die Temperatursenkung der Ränder der Glasscheiben (V) während des Pressens durch Anblasen der Ränder mit einem Kühlgas, vor allem Luft, insbesondere Druckluft, erreicht wird.

5. Verfahren nach Anspruch 4, dadurch gekennzeichnet, daß das Anblasen auf der Gesamtlänge der Ränder, vor allem auf dem Gesamtumfang der Glasscheiben (V) erfolgt.

6. Verfahren nach einem der vorhergehenden Ansprüche, dadurch gekennzeichnet, daß die Kühlung von einem Rand zum anderen moduliert wird.

7. Verfahren nach einem der vorhergehenden Ansprüche, dadurch gekennzeichnet, daß nach dem Pressen zwischen den Kühlplatten (3, 4) zumindest bis zur Spannungsfixierung die Glasscheiben (V) einer ergänzenden Kühlung unterworfen werden, insbesondere durch Anblasen ihrer gesamten Oberfläche mit einem Kühlgas, vor allem Luft.

8. Vorrichtung zum Kontaktvorspannen und gegebenenfalls zum Biegen von Glasscheiben (V), die zwei Kühlplatten (3, 4) umfaßt, die vorzugsweise mit einem mechanischen und thermischen Puffermaterial (5) überzogen sind und dazu bestimmt sind, gegen die Oberflächen der Glasscheiben (V) zur Anlage gebracht zu werden, dadurch gekennzeichnet, daß diese Vorrichtung außerdem Kühlelemente (11), insbesondere Blasdüsen für ein Kühlgas umfaßt, die vorgesehen sind, um auf die Ränder der Glasscheiben zu wirken.

9. Vorrichtung nach Anspruch 8, dadurch gekennzeichnet, daß die Glasscheiben (3, 4) über die Kühlplatten (V) hinausragen.

10. Vorrichtung nach Anspruch 9, dadurch gekennzeichnet, daß die Düsen (20) außer der Schnittfläche der Glasscheiben (V) auch den Rand der Oberflächen der Glasscheiben (V) abkühlen.

11. Vorrichtung nach Anspruch 8, dadurch gekennzeichnet, daß die Kühlplatten (3, 4) und die Glasscheiben (V) ungefähr gleich groß sind.

12. Durch Kontakt vorgespannte und gegebenenfalls gebogene Glasscheiben (V), die Randspannungen entlang der Ränder einer gleichen Scheibe aufweisen, die durch eine Ziffer ausgedrückt werden, die, in Abhängigkeit von den Vorspannbedingungen, niedriger oder höher als oder identisch mit der Ziffer, die die Druckspannungen der Oberflächen ausdrückt, ist, wobei diese Glasscheiben außerdem eine "Sekurit" benannte Vorspannung aufweisen, die sie als Verglasung für Kraftfahrzeuge verwendbar macht.

## Claims

1. A method of toughening and, possibly also, curving by contact of bodies of glass, in which cooling plates (3, 4), possibly covered with a thermal and mechanical buffer material (5) and possibly also curved, are applied onto the faces of the glass bodies (V) previously entirely heated to their toughening and curving temperature, characterized in that the temperature of the edges of the glass bodies is reduced by comparison with the remainder of their surface, before and/or during the pressing which produces the toughening and possibly the curving by contact of the bodies of glass, in such a manner that the glass is in compression throughout its thickness, at least at its edges.

2. A method according to Claim 1, characterized in that the reduction in temperature of the edges produced before the pressing is achieved by differential heating and/or blowing onto said edges of a cooling gas, in particular air, notably compressed air, the temperature of these edges nevertheless remaining higher than the toughening temperature.

3. A method according to Claim 2, characterized in that the differential heating is produced in the heating furnace (1) for the bodies of glass (V) by the interposition of thermal screens opposite the edges.

4. A method according to Claim 1, characterized in that the reduction in temperature of the edges of the bodies of glass (V) during the pressing is produced by blowing onto said edges of a cooling gas, in particular air, notably compressed air.

5. A method according to Claim 4, characterized in that the blowing is carried out over the entirety of the length of the edges, in particular over the entirety of the periphery of the bodies of glass (V).

6. A method according to one of the preceding Claims, characterized in that the cooling is modulated from one edge to another.

7. A method according to one of the preceding Claims, characterized in that, after pressing between the cooling plates (3, 4) at least until fixing of the stresses, the bodies of glass (V) are subjected to a complementary cooling, notably by blowing of cooling gas, in particular air, onto the whole of their surface.

8. Apparatus for toughening and possibly also curving by contact of bodies of glass (V), comprising two cooling plates (3, 4), preferably covered with a mechanical and thermal buffer material (5), the plates being intended to be applied against the faces of the bodies of glass (V), characterized in that the apparatus comprises, in addition, cooling means (11), notably small blowing nozzles for a cooling gas, arranged to act on the edges of the bodies of glass.

9. Apparatus according to Claim 8, characterized in that the cooling plates (3, 4) allow the bodies of glass (V) to project.

10. Apparatus according to Claim 9, characterized in that the nozzles (20) cool, in addition to the edge face of the glass bodies (V), the periphery of the faces of the glass bodies (V).

11. Apparatus according to Claim 8, characterized in that the cooling plates (3, 4) and the glass bodies (V) are of substantially the same size.

12. Glass bodies (V), toughened and possibly also curved by contact, possessing edge stresses along the edges of a single body expressed by a number, which according to the conditions of toughening may be less than, greater than or equal to the number which expresses the surface compression stresses, these bodies possessing, in addition, a toughening known as "Sécurit" making them suitable for use as panes for automobiles.

FIG_1

FIG_2

FIG_3A

FIG_3B

FIG_3C

FIG_3